Europäisches Patentamt

European Patent Office

Office européen des brevets

(11) Veröffentlichungsnummer: **0 249 698 B1**

## (12) EUROPÄISCHE PATENTSCHRIFT

(45) Veröffentlichungstag der Patentschrift: **04.03.92**

(21) Anmeldenummer: **87104968.0**

(22) Anmeldetag: **03.04.87**

(51) Int. Cl.⁵: **C08F 2/18**, C08F 10/02, C08F 2/06

(54) Verfahren zum Herstellen kleinteiliger Homo- und Copolymerisate des Ethens unter Verwendung eines flüssigen Alkans als Reaktionsmedium.

(30) Priorität: **12.04.86 DE 3612376**

(43) Veröffentlichungstag der Anmeldung:
**23.12.87 Patentblatt 87/52**

(45) Bekanntmachung des Hinweises auf die
Patenterteilung:
**04.03.92 Patentblatt 92/10**

(84) Benannte Vertragsstaaten:
**AT BE DE FR GB IT NL**

(56) Entgegenhaltungen:
**EP-A- 0 117 492**
**EP-A- 0 166 888**
**FR-A- 2 262 672**

(73) Patentinhaber: **BASF Aktiengesellschaft**
**Carl-Bosch-Strasse 38**
**W-6700 Ludwigshafen(DE)**

(72) Erfinder: **Mueller-Mall, Rudolf, Dr.**
**Ulmenweg 39**
**W-6708 Neuhofen(DE)**
Erfinder: **Funk, Guido, Dr.**
**Duererstrasse 5**
**W-6520 Worms 14(DE)**
Erfinder: **Bachl, Robert, Dr.**
**Parsevalstrasse 2**
**W-6520 Worms 1(DE)**
Erfinder: **Hennenberger, Peter, Dr.**
**Am Mandelgarten 19**
**W-6713 Freinsheim(DE)**
Erfinder: **Kolk, Erich, Dr.**
**Im Rustengut 14**
**W-6702 Bad Duerkheim(DE)**

**Beschreibung**

Die vorliegende Erfindung liegt im Rahmen eines Verfahrens zum kontinuierlichen Herstellen kleinteiliger, einen mittleren Teilchendurchmesser (nach DIN 53 477) von 0,3 bis 1,5, insbesondere 0,5 bis 1,2 mm, sowie eine Schüttdichte (nach DIN 53 468) von 0,400 bis 0,600, insbesondere 0,450 bis 0,550 $g/cm^3$, aufweisender Homopolymerisate des Ethens bzw. Copolymerisate des Ethens mit untergeordneten Mengen an $C_3$- bis $C_8$-$\alpha$-Monoolefinen durch katalytische, bei einer Temperatur von 60 bis 100, insbesondere 70 bis 90° C sowie unter einem Gesamtdruck von 30 bis 50, insbesondere 35 bis 45 bar in einem Kreisrohr-Reaktor vorgenommene Polymerisation unter Verwendung eines flüssig vorliegenden $C_4$- bis $C_8$-, insbesondere $C_4$- bis $C_6$-Alkans als Reaktionsmedium, worin sich das zu polymerisierende Ethen bzw. Ethen-Comonomer-Gemisch in gelöster Form und das gebildete Polymerisat in suspendierter Form befinden, sowie unter Führen des Reaktionsgemisches als Kreisstrom, welchem die Einsatzstoffe durch Einschleusen zugegeben werden und das gebildete Polymerisat durch Ausschleusen von Reaktionsgemisch entzogen wird.

Polymerisationsverfahren der betroffenen Gattung, d.h. Verfahren zum Herstellen von Homo- und Copolymerisaten des Ethens durch Suspensionspolymerisation des bzw. der Monomeren in einem flüssig vorliegenden Alkan, sind in mannigfachen Ausgestaltungen bekannt; hierzu kann im gegebenen Zusammenhang insbesondere auf die in den GB-A-841 263 und 1 435 965 sowie den US-A-3 242 150 und 4 007 321 oder auch in der EP-A-0 117 492 beschriebenen Arbeitsweisen, als exemplarischen Beispielen, verwiesen werden.

Es ist auch bekannt, daß bei dieser Art der kontinuierlichen Suspensionspolymerisation die sehr nachteilige Tendenz besteht, daß sich an den Oberflächen der Polymerisationsvorrichtungen, die mit dem Reaktionsgemisch in Berührung kommen, relativ rasch Beläge aus Polymerisat bilden. Besonders stark ausgeprägt ist diese Tendenz, wenn man kleinteilige Polymerisate mit ausgeprägt hohen Schüttdichten, d.h. Schüttdichten (nach DIN 53 468) von 0,400 bis 0,600, insbesondere 0,450 bis 0,550 $g/cm^3$ herstellen will.

Man kann die Tendenz zur Belagbildung zwar vermindern oder unterdrücken, indem man die Polymerisation in Gegenwart von speziellen Antistatika als Wandbelagverhinderungsmitteln - sog. "antifouling agents" - durchführt, doch muß man dann in Kauf nehmen, daß diese Mittel im Polymerisat includiert werden und dessen anwendungstechnische Eigenschaften negativ beeinflussen.

Hier setzt die Aufgabe an, die zur vorliegenden Erfindung geführt hat:

Ein Verfahren der eingangs definierten Gattung aufzuzeigen, mit dem es auch ohne Einsatz von Wandbelagverhinderungsmitteln möglich ist, unter stark verminderter oder unterdrückter Tendenz zur Belagbildung kleinteilige Polymerisate mit ausgeprägt hohen Schüttdichten - sowie auch anderweit guten morphologischen Eigenschaften - herzustellen.

Es wurde gefunden, daß die gestellte Aufgabe gelöst werden kann, wenn das Verfahren derart ausgestaltet wird, daß man (a) die mittlere Konzentration $C_m$ an Polymerisat im Kreisstrom auf einem Wert in einem bestimmten Bereich hält und (b) das Ausschleusen von Reaktionsgemisch an einer Stelle des Kreisstroms vornimmt, an der dessen Konzentration an Polymerisat einen Wert hat, der um einen deutlichen und bestimmten Betrag geringer ist als die mittlere Konzentration $C_m$.

Es wurde ferner gefunden, daß die gestellte Aufgabe besonders gut gelöst werden kann, wenn man zudem die Polymerisation unter Verwendung eines spezifischen Ziegler-Katalysatorsystems durchführt.

Gegenstand der vorliegenden Erfindung ist dementsprechend ein Verfahren zum kontinuierlichen Herstellen kleinteiliger, einen mittleren Teilchendurchmesser (nach DIN 53 477) von 0,3 bis 1,5, insbesondere 0,5 bis 1,2 mm, sowie eine Schüttdichte (nach DIN 53 468) von 0,400 bis 0,600, insbesondere 0,450 bis 0,550 $g/cm^3$, aufweisender Homopolymerisate des Ethens bzw. Copolymerisate des Ethens mit untergeordneten Mengen an $C_3$-bis $C_8$-$\alpha$-Monoolefinen durch katalytische, bei einer Temperatur von 60 bis 100, insbesondere 70 bis 90° C, sowie unter einem Gesamtdruck von 30 bis 50, insbesondere 35 bis 45 bar, in einem Kreisrohr-Reaktor vorgenommene Polymerisation unter Verwendung eines flüssig vorliegenden $C_4$- bis $C_8$-, insbesondere $C_4$- bis $C_6$-Alkans als Reaktionsmedium, worin sich das zu polymerisierende Ethen bzw. Ethen-Comonomer-Gemisch in gelöster Form und das gebildete Polymerisat in suspendierter Form befinden, sowie unter Führen des Reaktionsgemisches als Kreisstrom, welchem die Einsatzstoffe durch Einschleusen zugegeben werden und das gebildete Polymerisat durch Ausschleusen von Reaktionsgemisch entzogen wird.

Das erfindungsgemäße Verfahren ist dadurch gekennzeichnet, daß man

(a) die mittlere Konzentration $C_m$ an Polymerisat im Kreisstrom auf einem Wert im Bereich von 0,40 bis 0,70, insbesondere 0,50 bis 0,60 g Polymerisat pro g Reaktionsgemisch hält und

(b) das Ausschleusen von Reaktionsgemisch an einer Stelle des Kreisstroms vornimmt, an der dessen Konzentration an Polymerisat einen Wert im Bereich von $0,50 \bullet C_m$ bis $0,70 \bullet C_m$, insbesondere $0,55 \bullet C_m$ bis $0,65 \bullet C_m$ hat.

In einer bevorzugten Ausgestaltung ist das erfindungsgemäße Verfahren zusätzlich noch dadurch gekennzeichnet, daß die katalytische Polymerisation bewirkt wird durch ein Ziegler-Katalysatorsystem aus

(1) einer Übergangsmetall-Katalysatorkomponente,

(2) einer Organoaluminium-Katalysatorkomponente der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$-bis $C_{12}$-Alkylrest und vorzugsweise einen $C_2$- bis $C_8$-Alkylrest, und

m für eine Zahl von 1 bis 3, vorzugsweise eine Zahl von 2 bis 3,

und

(3) einer Organohalogen-Katalysatorkomponente (= Cokatalysator),

mit den Maßgaben, daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 50, und das Molverhältnis Organoaluminium-Katalysatorkomponente (2) : Organohalogen-Katalysatorkomponente (3) im Bereich von 1 : 0,001 bis 1 : 20, vorzugsweise 1 : 0,01 bis 1 : 5, liegt, sowie mit der Besonderheit, daß eingesetzt wird als

(1) Übergangsmetall-Katalysatorkomponente das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 $\mu$m, ein Porenvolumen von 0,3 bis 3, vorzugsweise 1 bis 2,5 $cm^3/g$, sowie eine Oberfläche von 100 bis 1.000, vorzugsweise 200 bis 400 $m^2/g$, besitzt und die Formel $SiO_2 \bullet aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gewichtsteilen eines Oxakohlenwasserstoffs gesättigt aliphatischer oder teils gesättigt aliphatischer, teils aromatischer Natur, der 1 bis 2 Oxasauerstoffatome sowie mehr als 3, aber weniger als 19 Kohlenstoffatome aufweist, vorzugsweise eines Oxakohlenwasserstoffs gesättigt aliphatischer oder teils gesättigt aliphatischer, teils aromatischer Natur, der 1 Oxasauerstoffatom sowie mehr als 3, aber weniger als 11 Kohlenwasserstoffatome aufweist, insbesondere eines ringgeschlossenen Oxakohlenwasserstoffs gesättigt aliphatischer Natur, der 1 Oxasauerstoffatom sowie 4 bis 6 Kohlenstoffatome aufweist, und vor allem Tetrahydrofuran, und

(IIb) 0,01 bis 50, vorzugsweise 1 bis 30 Gewichtsteilen eines Gemisches aus

(IIb1) 100 Molteilen eines Vanadiumtrihalogenid-Alkohol-Komplexes der Formel $VY_3 \bullet nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 6 Kohlenstoffatome aufweisenden Alkylrest,

(IIb2) 0,2 bis 300, vorzugsweise 0,5 bis 100 Molteilen eines Titantrihalogenids, wobei das Halogen Chlor und/oder Brom sein kann, vorzugsweise eines Titantrichlorids, oder eines Titantrihalogenid-Alkohol-Komplexes der Formel $TiY_3 \bullet nZ\text{-}OH$, worin stehen Y für Chlor oder Brom, vorzugsweise Chlor, n für eine Zahl von 1 bis 6, vorzugsweise 3 bis 4, und Z für einen einwertigen, nicht mehr als 10, vorzugsweise nicht mehr als 8 Kohlenstoffatome aufweisenden Kohlenwasserstoffrest gesättigt-aliphatischer oder teils gesättigt-aliphatischer, teils aromatischer Natur, insbesondere einen nicht mehr als 4 Kohlenstoffatome aufweisenden Alkylrest, sowie

(IIb3) - gegebenenfalls und vorteilhafterweise - 1 bis 400, vorzugsweise 3 bis 200 Molteilen eines Zirkontetrahalogenids, wobei das Halogen Chlor und/oder Brom sein kann, vorzugsweise eines Zirkontetrachlorids,

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 2, vorzugsweise von 1 : 0,2 bis 1 : 1,5, liegt, die Suspension (III) bei einer Temperatur, die unterhalb von 200, vorzugsweise unterhalb von 160 °C, und oberhalb des Schmelzpunktes des verwendeten Oxakohlenwasserstoffs (IIa) liegt, bis zur trockenen Konsistenz - Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel $AlR_mX_{3-m}$, worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise die Zahl 2,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1, liegt, -wobei das dabei als Suspendiertes resultierende festphasige Produkt (VI) die Übergangsmetall-Katalysatorkomponente (1) ist -.

Dieses Ziegler-Katalysatorsystem als solches sowie auch dessen besondere Übergangsmetall-Katalysatorkomponente (1) für sich allein genommen, sind nicht Gegenstand der vorliegenden Erfindung; sie sind bekannt aus und im Detail beschrieben in der EP-A-0 166 888, womit sich an dieser Stelle eine nähere Erläuterung des Systems sowie seiner besonderen Katalysatorkomponente (1) erübrigt.

Zur technischen Seite des neuen Verfahrens ist im einzelnen das Folgende zu sagen:

Es ist seiner Spezies nach ein Verfahren zum kontinuierlichen Herstellen kleinteiliger Homopolymerisate des Ethens oder Copolymerisate des Ethens mit untergeordneten Mengen an $\alpha$-Monoolefinen durch katalytische Polymerisation in einem flüssig vorliegenden Alkan - worin sich das zu polymerisierende Monomere bzw. Monomerengemisch in gelöster Form, das gebildete partikelförmige Polymerisat in suspendierter Form befinden -als Reaktionsmedium, bei erhöhter Temperatur sowie erhöhtem Druck, unter Führen des Reaktionsgemischs als Kreisstrom, welchem die Ausgangsstoffe durch Einschleusen zugegeben werden und das gebildete partikelförmige durch Ausschleusen von Reaktionsgemisch entzogen wird; - wobei die katalytische Polymerisation vorzugsweise bewirkt wird durch ein speziell ausgewähltes Ziegler-Katalysatorsystem.

Insoweit - also seiner Spezies nach - weist das erfindungsgemäße Verfahren keine Besonderheiten auf und kann in einschlägig üblicher Weise durchgeführt werden (vgl. dazu etwa die eingangs zitierten Patentpublikationen); - womit sich nähere Ausführungen hierzu erübrigen.

Demgegenüber liegt die primäre Eigenart des erfindungsgemäßen Verfahrens darin, daß man

(a) die mittlere Konzentration $C_m$ an Polymerisat im Kreisstrom auf einem Wert im Bereich von 0,40 bis 0,70, insbesondere 0,50 bis 0,60 g Polymerisat pro g Reaktionsgemisch hält und

(b) das Ausschleusen von Reaktionsgemisch an einer Stelle des Kreisstroms vornimmt, an der dessen Konzentration an Polymerisat einen Wert im Bereich von $0{,}50 \bullet C_m$ bis $0{,}70 \bullet C_m$, insbesondere $0{,}55 \bullet C_m$ bis $0{,}65 \bullet C_m$ hat.

Dieser erfindungsgemäßen Lehre vorgelagert war die - durch eine Reihe von Messungen gewonnene - überraschende Erkenntnis, daß bei der in Rede stehenden Spezies von Polymerisationsverfahren die an einem Ort vorliegende Konzentration an Polymerisat im Kreisstrom unter kontinuierlich-stationären Bedingungen zwar nicht mit der Zeit, aber von Ort zu Ort erhebliche Unterschiede aufweist.

Arbeitet man mit dem einschlägig üblichen Typ von Kreisrohr-Reaktor, so wird man im allgemeinen einen geeigneten Ort für das Ausschleusen von Reaktionsgemisch unter den erfindungsgemäßen Bedingungen antreffen im untersten Abschnitt des Kreisrohrs auf dessen oberster Innenseite - ein Faktum, das im übrigen durch einfache Messung leicht zu überprüfen bzw. festzustellen ist.

Beispiel

A) Copolymerisation von Ethen und Buten-(1)

Sie erfolgte kontinuierlich in einem üblichen Schleifenreaktor des Typs, wie er in der US-PS 3 242 150 beschrieben ist; das Kreisrohr des Reaktors hatte einen inneren Umfang von 11,4 m und einen inneren Durchmesser von 0,15 m.

Im einzelnen wurde dabei im kontinuierlich-stationären Betrieb wie folgt gearbeitet:

a) Als Reaktionsmedium wurde iso-Butan eingesetzt.

b) Die Menge an monomerem Ethen im Reaktionsgemisch wurde konstant auf 25 Vol.% gehalten.

c) Die Menge an monomerem Buten-(1) im Reaktionsgemisch wurde konstant auf 4 Vol.% gehalten.

d) Die Menge an Wasserstoff im Reaktionsgemisch wurde konstant auf 0,15 Vol.% gehalten.

e) Es wurde eingesetzt ein Ziegler-Katalysatorsystem, wie es Gegenstand der EP-A 0 166 888 ist, nämlich aus

(1) einer Übergangsmetall-Katalysatorkomponente, wie sie am Schluß dieses Beispiels beschrieben ist,

(2) Aluminiumtriisobutyl sowie

(3) Trichlormonofluormethan,

mit den Maßgaben, daß das Atomverhältnis Übergangsmetall aus der Katalysatorkomponente (1) : Aluminium aus der Katalysatorkomponente (2) 1 : 5,63 und das Molverhältnis Katalysatorkomponente (2) : Katalysatorkomponente (3) 1 : 0,11 - jeweils konstant betrugen.

Bezugsgröße für die Absolutmengen dieser Katalysatorkomponenten war eine - konstant gehaltene - Konzentration des Aluminiumtriisobutyls im Reaktionsgemisch von 135 mg/kg iso-Butan.

(f) Es wurde bei einer Temperatur von 80°C copolymerisiert, entsprechend einem Gesamtdruck des Reaktionsgemisches von etwa 40 bar.

g) Das Reaktionsgemisch wurde als Kreisstrom mit einer Geschwindigkeit von 8 m/s geführt.

h) Die mittlere Konzentration $C_m$ an Polymerisat im Kreisstrom wurde konstant auf 0,54 g Polymerisat pro g Reaktionsgemisch gehalten.

i) Das gebildete Polymerisat wurde dem Reaktor durch Ausschleusen von Reaktionsgemisch entzogen in der Mitte des untersten Abschnitts des Kreisrohrs auf dessen oberster Innenseite; - hier hatte die Konzentration an Polymerisat einen Wert von 0,59 • $C_m$, entsprechend 0,32 g Polymerisat pro g Reaktionsgemisch.

Auf diese Weise wurden 19,5 kg Copolymerisat pro Stunde gewonnen; es besaß einen Schmelzindex (nach DIN 53735 bei 190°/21,6 kg) von 165 g/10′, eine Dichte (nach DIN 53479) von 0,949 g/cm³, einen mittleren Teilchendurchmesser (nach DIN 53477) von 0,95 mm sowie eine Schüttdichte (nach DIN 53468) von 495 g/cm³.

Auch bei vielwöchigem Betrieb bildeten sich im Reaktor keine Wandbeläge aus Polymerisat.

B) Herstellung der zur oben dargelegten Polymerisation eingesetzten Übergangsmetall-Katalysatorkomponente (1)

Stufe (1.1)

Es wurde ausgegangen von 25 Gewichtsteilen Siliciumdioxid ($SiO_2$, Teilchendurchmesser: 20-60 μm, Porenvolumen: 1,75 cm³/g, Oberfläche: 340 m²/g) sowie einer Lösung aus 100 Gewichtsteilen Tetrahydrofuran und 12,5 Gewichtsteilen einer Übergangsmetallkomposition, bestehend aus 100 Molteilen eines Vanadiumtrihalogenid-Alkohol-Komplexes der Formel $VCl_3•4\ ZOH$, worin Z steht für einen iso-Propylrest, 1,3 Molteilen eines Titantrihalogenids der Formel $TiCl_3•1/3\ AlCl_3$ sowie 6,7 Molteilen Zirkontetrachlorid. Diese zwei Komponenten wurden vereinigt und die dabei erhaltene Suspension kurz gerührt. Anschließend wurde das gebildete festphasige Zwischenprodukt isoliert durch Abtreiben der flüchtigen Bestandteile in einem Rotationsverdampfer, der bis zu einem Betriebsdruck von 10 mbar und einer Betriebstemperatur von 70°C gebracht wurde.

Stufe (1.2)

20 Gewichtsteile des in Stufe (1.1) gewonnenen festphasigen Zwischenprodukts wurden in 100 Gewichtsteilen n-Heptan suspendiert, worauf diese Suspension mit einer Lösung aus 8 Gewichtsteilen Diethylaluminiumchlorid in 20 Gewichtsteilen n-Heptan versetzt und die daraus resultierende Suspension kurz bei 65°C gerührt wurde. Anschließend wurde filtriert, dreimal mit n-Heptan gewaschen und im Vakuum getrocknet. Die Analyse des erhaltenen festphasigen Produktes - d.h. der Katalysatorkomponente (1) - ergab einen Gehalt an Übergangsmetallen von 0,00156 Mol/g.

**Patentansprüche**

1. Verfahren zum kontinuierlichen Herstellen kleinteiliger, einen mittleren Teilchendurchmesser (nach DIN 53 477) von 0,3 bis 1,5 mm sowie eine Schüttdichte (nach DIN 53 468) von 0,400 bis 0,600 g/cm³ aufweisender Homopolymerisate des Ethens bzw. Copolymerisate des Ethens mit untergeordneten Mengen an $C_3$- bis $C_8$-α-Monoolefinen durch katalytische, bei einer Temperatur von 60 bis 100°C sowie unter einem Gesamtdruck von 30 bis 50 bar in einem Kreisrohr-Reaktor vorgenommene Polymerisation unter Verwendung eines flüssig vorliegenden $C_4$- bis $C_8$-Alkans als Reaktionsmedium, worin sich das zu polymerisierende Ethen bzw. Ethen-Comonomer-Gemisch in gelöster Form und das gebildete Polymerisat in suspendierter Form befinden, sowie unter Führen des Reaktionsgemisches als Kreisstrom, welchem die Einsatzstoffe durch Einschleusen zugegeben werden und das gebildete Polymerisat durch Ausschleusen von Reaktionsgemisch entzogen wird, dadurch gekennzeichnet, daß man

(a) die mittlere Konzentration $C_m$ an Polymerisat im Kreisstrom auf einem Wert im Bereich von 0,40 bis 0,70 g Polymerisat pro g Reaktionsgemisch hält und

(b) das Ausschleusen von Reaktionsgemisch an einer Stelle des Kreisstroms vornimmt, an der dessen Konzentration an Polymerisat einen Wert im Bereich von 0,50 • $C_m$ bis 0,70 • $C_m$ hat.

## Claims

**1.** A process for the continuous preparation of a finely divided homopolymer of ethene or copolymer of ethene with a minor amount of a $C_3$-$C_8$-$\alpha$-monoolefin, with an average particle diameter (by DIN 53,477) of from 0.3 to 1.5 mm and a bulk density (by DIN 53,468) of from 0.400 to 0.600 $g/cm^3$ by catalytic polymerization at from 60 to 100 °C and at a total pressure of from 30 to 50 bar in a circular tube reactor using a $C_4$-$C_8$-alkane which is present in liquid form as reaction medium in which the ethene or ethene-comonomer mixture to be polymerized is present in dissolved form and the polymer formed is present in suspended form, and running the reaction mixture as a cycle stream to which the feed materials are added by bleeding in and from which the polymer formed is withdrawn by bleeding out reaction mixture, which comprises

(a) maintaining the mean concentration $C_m$ of polymer in the cycle stream at a value within the range from 0.40 to 0.70 g of polymer per g of reaction mixture and

(b) effecting the bleeding out of reaction mixture at a point of the cycle stream where the concentration of polymer has a value within the range from $0.50 \times C_m$ to $0.70 \times C_m$.

## Revendications

**1.** Procédé de préparation en continu d'un homopolymère d'éthylène ou d'un copolymère d'éthylène avec de faibles quantités d'$\alpha$-monooléfines en $C_3$-$C_8$, homopolymère ou copolymère en petites particules présentant un diamètre moyen des particules (selon la norme DIN 53 477) de 0,3 à 1,5 mm ainsi qu'une masse volumique apparente (selon la norme DIN 53 468) de 0,400 à 0,600 $g/cm^3$, par polymérisation catalytique effectuée à une température de 60 à 100 °C ainsi que sous une pression totale de 30 à 50 bar dans un réacteur à recyclage, en utilisant un alcane en $C_4$-$C_8$ liquide présent dès le début comme milieu réactionnel, l'éthylène ou le mélange éthylènecomonomère à polymériser se trouvant sous forme dissoute et le polymère obtenu sous forme suspendue, ainsi qu'en entraînant le mélange réactionnel en tant que courant de circulation dans lequel les substances de départ sont ajoutées par un sas d'entrée et duquel le polymère formé est enlevé du mélange réactionnel par un sas de sortie, caractérisé en ce que

(a) la concentration moyenne $C_m$ en polymère dans le courant de circulation est maintenue à une valeur comprise entre 0,40 à 0,70 g de polymère par g de mélange réactionnel et

(b) le sas de sortie du mélange réactionnel se trouve à un endroit du courant de circulation auquel sa concentration en polymère a une valeur comprise entre $0,50 . C_m$ à $0,70 . C_m$.